# EUROPÄISCHE PATENTANMELDUNG

(11) **EP 3 663 054 A1**
(43) Veröffentlichungstag der Anmeldung: **10.06.2020**
(21) Anmeldenummer: 18210455.4
(22) Anmeldetag: 05.12.2018
(51) Int. Cl.: B25J 9/16, B25J 19/00, B25J 19/04

(54) **GELENKARMROBOTER**

(71) Anmelder: Siemens Aktiengesellschaft, 80333 München (DE)
(72) Erfinder: Meyer-Delius Di Vasto, Daniel, 81541 München (DE)

(57) **Zusammenfassung**

Der Gelenkarmroboter (GAR) weist einen Roboterarm (RA) mit einem über ein Gelenk (G1,...,G4) beweglichen Armglied (L1,L2,L3) sowie einen Sensor (SEN1,...,SEN4) zum fortlaufenden Messen eines Statusparameters (SP1,...,SP4) des Gelenks auf. Weiterhin verfügt der Gelenkarmroboter (GAR) über eine am Roboterarm (RA) in räumlicher Zuordnung zum Gelenk angeordnete, optische Signalisierungseinrichtung (S1,...,S4) sowie über eine Bewertungseinrichtung (BE1,...,BE4) zum fortlaufenden, gelenkspezifischen Bewerten des gemessenen Statusparameters (SP1,...,SP4) und zum Ansteuern der Signalisierungseinrichtung (S1,...,S4) abhängig vom Bewertungsergebnis.

## Beschreibung

Viele Robotersysteme, wie zum Beispiel Fertigungsroboter, Medizinroboter, Serviceroboter oder Industrieroboter sind mit einem oder mehreren Roboterarmen ausgestattet. Bei modernen Varianten derartiger Gelenkarmroboter können Bewegungsabläufe eines jeweiligen Roboterarms durch manuelles Führen des Roboterarms von einem Operateur eingelernt oder programmiert werden. Hierbei bewegt der Operateur manuell eines oder mehrere Armglieder des Roboterarms während die dabei durchlaufenen Auslenkungen, Orientierungen und/oder Positionen der Gelenke und/oder der Armglieder fortlaufend protokolliert werden. Anhand der so gespeicherten Bewegungsdaten kann der Gelenkarmroboter den eingelernten Bewegungsablauf beliebig wiederholen. Eine solche Programmierung von Bewegungsabläufen von Robotern wird häufig auch als "Teaching" oder spezifischer als "Hand-Guiding" bezeichnet.

Ein derartiges Teaching oder auch andere manuelle Interaktionen zwischen Roboter und Operateur erfordern jedoch häufig spezifische Kenntnisse über die kinematischen und dynamischen Eigenschaften und Einschränkungen des Roboters. So sind bei der Bewegung des Roboterarms in der Regel verschiedene Nebenbedingungen zu beachten, wie zum Beispiel maximale Drehwinkel oder Auslenkungen der Gelenke oder der Armglieder sowie deren Belastungsgrenzen. Das Erfordernis zur Beachtung solcher Nebenbedingungen kann sich auf die Effizienz der Interaktion mit dem Roboter erheblich auswirken.

Es ist Aufgabe der vorliegenden Erfindung, einen Gelenkarmroboter anzugeben, der eine effizientere Interaktion zwischen Roboter und Operateur erlaubt.

Gelöst wird diese Aufgabe durch einen Gelenkarmroboter mit den Merkmalen des Patentanspruchs 1.

Der erfindungsgemäße Gelenkarmroboter weist einen Roboterarm mit einem über ein Gelenk beweglichen Armglied sowie einen Sensor zum fortlaufenden Messen eines Statusparameters des Gelenks auf. Weiterhin verfügt der Gelenkarmroboter über eine am Roboterarm in räumlicher Zuordnung zum Gelenk angeordnete, optische Signalisierungseinrichtung sowie über eine Bewertungseinrichtung zum fortlaufenden, gelenkspezifischen Bewerten des gemessenen Statusparameters und zum Ansteuern der Signalisierungseinrichtung abhängig von einem Ergebnis der Bewertung.

Durch die am Roboterarm angeordnete Signalisierungseinrichtung kann ein kinematischer oder dynamischer Zustand des Gelenks oder des Armglieds auf einfache Weise visualisiert werden. Insbesondere kann ein Operateur einen aktuellen kinematischen oder dynamischen Zustand des Gelenks oder des Armglieds optisch wahrnehmen, ohne seinen Blick vom gerade geführten oder sich bewegenden Roboterarm abzuwenden. Dies erlaubt in vielen Fällen eine genauere, schnellere, sicherere und damit effizientere Interaktion zwischen dem Gelenkarmroboter und dem Operateur.

Vorteilhafte Ausführungsformen und Weiterbildungen der Erfindung sind in den abhängigen Ansprüchen angegeben.

Gemäß einer vorteilhaften Ausführungsform der Erfindung kann der Statusparameter
eine Auslenkung, einen Drehwinkel, eine Drehgeschwindigkeit oder einen anderen kinematischen Bewegungsparameter des Gelenks,
eine Kraft, eine Belastung, ein Drehmoment oder einen anderen dynamischen Kraftparameter des Gelenks und/oder eine Temperatur, einen Öldruck, eine Ölmenge oder einen anderen Betriebsparameter des Gelenks betreffen. Der Statusparameter kann insbesondere ein eindimensionaler oder mehrdimensionaler Parameter sein, durch den ein oder mehrere physikalische Parameter des Gelenks quantifiziert werden. Zum Messen einer vom Gelenk ausgeübten oder darauf einwirkenden Kraft
kann insbesondere ein Motorstrom, ein Öldruck oder ein anderer Hydraulikdruck des Gelenks vom Sensor gemessen werden. In der Regel kann mittels des Statusparameters des Gelenks auch ein Zustand des Armglieds abgleitet werden.

Nach einer weiteren vorteilhaften Ausführungsform der Erfindung kann die Bewertungseinrichtung dazu eingerichtet sein, eine Abweichung zwischen dem gemessenen Statusparameter und einem Referenzparameter zu quantifizieren. Die Signalisierungseinrichtung kann entsprechend dazu eingerichtet sein, abhängig von der quantifizierten Abweichung graduell abgestufte optische Signale abzugeben. Der Referenzparameter kann insbesondere ein eindimensionaler oder mehrdimensionaler Parameter sein, durch den ein oder mehrere gelenkspezifische Grenzwerte, Nebenbedingungen oder Randbedingungen des Gelenks, z.B. als Schwellwerte quantifiziert werden. Insbesondere kann der Referenzparameter eine kinematische Nebenbedingung, wie beispielsweise eine Einschränkung der Bewegung oder Auslenkung des Gelenks, in Form einer maximalen Auslenkung oder eines maximalen Drehwinkels angeben. Weiterhin kann der Referenzparameter eine dynamische Nebenbedingung, wie beispielsweise ein maximales auf das Gelenk einwirkendes oder von diesem ausgeübtes Drehmoment quantifizieren. Insofern derartige Grenzwerte vom Operateur häufig nicht direkt zu beobachten sind, ist eine Visualisierung der quantifizierten Abweichung durch die Signalisierungseinrichtung in der Regel sehr hilfreich.

Weiterhin kann der Gelenkarmroboter eine Teaching-Einrichtung zum Einlernen eines Bewegungsablaufs des Roboterarms durch manuelles Führen des Roboterarms und Auswerten des gemessenen Statusparameters aufweisen. Die Bewertungseinrichtung kann entsprechend dazu eingerichtet sein, die Signalisierungseinrichtung während des Einlernens anhand des gemessenen Statusparameters anzusteuern. Durch eine Visualisierung des Statusparameters während des Einlernens können kinematische oder dynamische Zustände des Gelenks, die vom Operateur oft nicht direkt zu beobachten sind, in interaktiver Weise und ohne den Blick vom Roboterarm abzuwenden, berücksichtigt werden.

Vorzugsweise kann die Signalisierungseinrichtung am Armglied in einem Abstand zum Gelenk angebracht sein, der geringer ist, als ein Abstand zu anderen Gelenken des Roboterarms. Insbesondere kann die Signalisierungseinrichtung unmittelbar neben dem zugeordneten Gelenk auf einem starren Teil des Armglieds angeordnet sein. Auf diese Weise wird die räumliche Zuordnung der Signalisierungseinrichtung zum Gelenk intuitiv erkennbar.

Nach einer weiteren vorteilhaften Ausführungsform der Erfindung kann die Signalisierungseinrichtung eine oder mehrere Leuchtdioden und/oder ein oder mehrere Displays umfassen.

Insbesondere kann die Signalisierungseinrichtung ein oder mehrere berührungsempfindliche Displays umfassen. Derartige berührungsempfindliche Displays erlauben einem Operateur während des Einlernens oder während anderer Interaktionen mit dem Gelenkarmroboter, gelenkspezifische Eingaben am Roboterarm selbst zu tätigen.

Vorteilhafterweise kann die Signalisierungseinrichtung Leuchtmittel umfassen, die ringförmig oder teilringförmig um das Armglied und/oder um das Gelenk angebracht sind. Dies kann beispielsweise ein Ring von Leuchtdioden, ein Ring von Displays von Taschenrechnern oder Smartwatches oder ein zu einem Ring gebogenes Display sein. Derartige ringförmige Leuchtmittel sind in der Regel von allen Seiten gut sichtbar.

Weiterhin kann die Signalisierungseinrichtung dazu eingerichtet sein, abhängig vom Ergebnis der Bewertung eine Signalintensität und/oder Signalfarbe zu variieren.

Insbesondere kann die Signalisierungseinrichtung mehrere optische Signalgeber umfassen, die jeweils individuell und abhängig vom Ergebnis der Bewertung aktivierbar sind. Dies können beispielsweise mehrere Ringe von vorzugsweise verschiedenfarbigen Leuchtmitteln sein.

Nach einer vorteilhaften Weiterbildung der Erfindung kann die Signalisierungseinrichtung ferner eine Richtungsanzeige umfassen. Die Bewertungseinrichtung kann entsprechend dazu eingerichtet sein, anhand des gemessenen Statusparameters eine bewegungsoptimierende und/oder kraftoptimierende Vorzugsrichtung für eine Bewegung des Gelenks zu ermitteln und die Richtungsanzeige abhängig von der ermittelten Vorzugsrichtung anzusteuern.

Ein Ausführungsbeispiel der Erfindung wird nachfolgend anhand der Zeichnung näher erläutert. Dabei zeigen jeweils in schematischer Darstellung:
- Figur 1: einen erfindungsgemäßen Gelenkarmroboter,
- Figur 2: einen Teil eines Roboterarms des Gelenkarmroboters und
- Figur 3: ein funktionales Diagramm zur Veranschaulichung des Einlernens eines Bewegungsablaufs des Gelenkarmroboters.

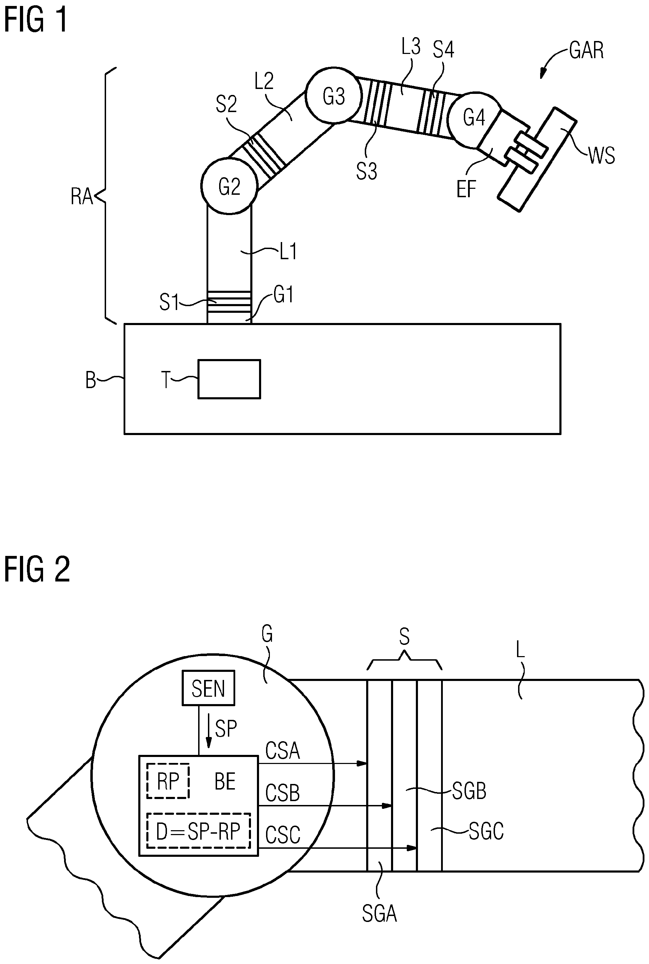

In Figur 1 ist ein erfindungsgemäßer Gelenkarmroboter GAR, zum Beispiel ein Fertigungsroboter, Medizinroboter, Serviceroboter, Industrieroboter oder ein anderer mit Benutzern oder Operateuren interagierender Roboter schematisch dargestellt. Der Gelenkarmroboter GAR verfügt über einen Roboterarm RA, der auf einer Roboterbasis B montiert ist.

Der Roboterarm RA ist mit der Roboterbasis B über ein Gelenk G1 des Roboterarms RA verbunden. Das Gelenk G1, dessen Drehachse im vorliegenden Ausführungsbeispiel senkrecht steht, verbindet ein Armglied L1 des Roboterarms RA mit der Roboterbasis B. Das Armglied L1 ist weiterhin über ein Gelenk G2 mit einem Armglied L2, dieses über ein Gelenk G3, mit einem Armglied L3 und dieses über ein Gelenk G4 mit einem Endeffektor EF verbunden. Dies Gelenke G1,...,G4 und die Armglieder L1,...,L3 sowie der Endeffektor EF sind Teile des Roboterarms RA. Der Endeffektor EF greift in Figur 1 beispielshaft ein vom Gelenkarmroboter GAR zu handhabendes Werkstück WS. Derartige Gelenke eines Roboterarms werden häufig auch als Achsen oder Joints bezeichnet, die Armglieder als Links.

Der Gelenkarmroboter GAR verfügt weiterhin über eine Teaching-Einrichtung T zum Einlernen eines Bewegungsablaufs des Roboterarms RA durch manuelles Führen, d.h. Bewegen des Roboterarms RA durch einen Operateur. Der Roboterarm RA kann insbesondere durch manuelles Bewegen des Endeffektors EF geführt werden.

Während der Roboterarm RA durch den Operateur geführt wird, werden die hierdurch veranlassten Bewegungen der Gelenke G1,...,G4 und/oder der Armglieder L1,...,L3 gemessen und in Form von Bewegungsdaten gespeichert. Anhand der so gespeicherten Bewegungsdaten kann der Gelenkarmroboter GAR mittels der Teaching-Einrichtung T jeden eingelernten Bewegungsablauf beliebig wiederholen.

Am Roboterarm RA sind weiterhin jeweils gelenkspezifische optische Signalisierungseinrichtungen S1,...,S4 jeweils in räumlicher Zuordnung zu einem Gelenk G1, G2, G3 bzw. G4 angebracht. Durch die räumliche Zuordnung ist eine jeweilige Signalisierungseinrichtung S1,... bzw. S4 einem jeweiligen Gelenk G1,... bzw. G4 gelenkspezifisch zugeordnet. Im vorliegenden Ausführungsbeispiel sind die Signalisierungseinrichtung S1 dem Gelenk G1, die Signalisierungseinrichtung S2 dem Gelenk G2, die Signalisierungseinrichtung S3 dem Gelenk G3 und die Signalisierungseinrichtung S4 dem Gelenk G4 zugeordnet.

Die Signalisierungseinrichtungen S1,...,S4 sind jeweils nahe am jeweils zugeordneten Gelenk G1,... bzw. G4 ringförmig um ein mit dem betreffenden Gelenk verbundenen Armglied L1, L2 bzw. L3 angeordnet. Die Anordnung ist derart, dass eine Zugehörigkeit einer Signalisierungseinrichtung zum betreffenden Gelenk unmittelbar und eindeutig durch den Operateur wahrnehmbar ist. Alternativ oder zusätzlich kann eine gelenkspezifische Signalisierungseinrichtung am zugeordneten Gelenk selbst angebracht sein.

Im vorliegenden Ausführungsbeispiel umfassen die Signalisierungseinrichtungen S1, S2, S3 und S4 jeweils mehrere individuell ansteuerbare Ringe mit Leuchtmitteln, zum Beispiel Ringe mit Leuchtdioden oder ringförmig gebogene Displays. In Figur 1 sind pro Signalisierungseinrichtung S1, S2, S3 beziehungsweise S4 jeweils drei um ein jeweiliges Armglied angebrachte Ringe angedeutet.

Figur 2 veranschaulicht einen Teil des Roboterarms RA in detaillierterer Darstellung.

Von den in Figur 1 dargestellten Gelenken G1,...,G4 sind in Figur 2 ein Gelenk G sowie ein damit verbundenes Armglied L der Armglieder L1,...,L3 beispielhaft dargestellt. Ein weiteres der Armglieder ist auf der linken Seite des Gelenks G angedeutet. Weiterhin ist eine Signalisierungseinrichtung S der Signalisierungseinrichtungen S1,...,S4 in Gelenknähe um das Armglied L ringförmig angebracht. Die Signalisierungseinrichtung S umfasst im vorliegenden Ausführungsbeispiel verschiedene optische Signalgeber SGA, SGB und SGC.

Im oder am Gelenk G sind ein oder mehrere gelenkspezifische Sensoren SEN angeordnet. Die Sensoren SEN messen im vorliegenden Ausführungsbeispiel fortlaufend und in Echtzeit einen Drehwinkel des Gelenks G als kinematischen Bewegungsparameter sowie ein auf das Gelenk G einwirkendes oder davon ausgeübtes Drehmoment als dynamischen Kraftparameter des Gelenks G. Ein solcher Kraftparameter kann auf einfache Weise durch Messung eines Motorstroms oder eines Hydraulikdrucks des Gelenks G ermittelt werden.

Der Drehwinkel sowie das Drehmoment werden als quantifizierter, gelenkspezifischer und mehrkomponentiger Statusparameter SP des Gelenks G erfasst und von den Sensoren SEN zu einer Bewertungseinrichtung BE übermittelt. Alternativ oder zusätzlich kann der Statusparameter SP auch andere physikalische Parameter oder Betriebsparameter des Gelenks G quantifizieren.

Die Bewertungseinrichtung BE ist an die Sensoren SEN sowie an die Signalisierungseinrichtung S gekoppelt und vorzugsweise innerhalb des Gelenks G angeordnet. Alternativ oder zusätzlich kann die Bewertungseinrichtung BE auch ganz oder teilweise extern zum Gelenk implementiert sein, insbesondere im Gelenkarmroboter GAR oder ganz oder teilweise extern zum Gelenkarmroboter GAR.

Im folgenden Ausführungsbeispiel ist die Bewertungseinrichtung BE im Gelenk G angeordnet und wird gelenkspezifisch und unabhängig von korrespondierenden Bewertungseinrichtungen für andere Gelenke betrieben. Damit kann in vielen Fällen auf eine zusätzliche Abstimmung oder Kommunikation mit anderen Steuerelementen verzichtet werden.

Die Bewertungseinrichtung BE dient zum fortlaufenden, gelenkspezifischen Bewerten des gemessenen Statusparameter SP des Gelenks G im Hinblick auf ein oder mehrere vorgegebene Zielkriterien. Im vorliegenden Ausführungsbeispiel werden die Zielkriterien durch einen gelenkspezifischen, mehrkomponentigen Referenzparameter RP definiert, der in der Bewertungseinrichtung BE gespeichert wird. Der Referenzparameter RP umfasst hierbei einen Grenzwert für den Drehwinkel des Gelenks G als kinematische Nebenbedingung und einen Grenzwert für ein einwirkendes oder ausgeübtes Drehmoment des Gelenks G als dynamische Nebenbedingung. Zum Ausführen der Bewertung kann die Bewertungseinrichtung BE über einen oder mehrere Prozessoren sowie über einen oder mehrere mit dem Prozessor gekoppelte Speicher verfügen.

Zur Bewertung des Statusparameters SP vergleicht die Bewertungseinrichtung BE die Komponenten des Statusparameters SP mit den Komponenten des Referenzparameters RP und quantifiziert eine Abweichung D zwischen Statusparameter SP und Referenzparameter RP als gelenkspezifisches Bewertungsergebnis. Die Abweichung D kann bei als Differenz SP-RP des Statusparameters SP und des Referenzparameters RP oder als Betrag oder Quadrat dieser Differenz ermittelt werden. Die Abweichung D kann als mehrkomponentige Größe quantifiziert werden, oder es können komponentenweise Abweichungen zu einer skalaren Abweichung D zusammengefasst werden. Im vorliegenden Ausführungsbeispiel wird eine mehrkomponentige Abweichung D ermittelt, die eine Abweichung zwischen dem Bewegungsparameter des Statusparameters SP und dem zugehörigen Grenzwert des Referenzparameters RP sowie eine Abweichung zwischen dem Kraftparameter des Statusparameters SP und dem zugehörigen Grenzwert des Referenzparameters RP umfasst.

Abhängig von den Werten der Komponenten der Abweichung D werden durch die Bewertungseinrichtung BE abgestufte, signalgeberspezifische Steuersignale CSA, CSB und CSC gebildet, durch die die Signalisierungseinrichtung S in quantifizierter Weise angesteuert wird. Dabei werden der Signalgeber SGA durch das Steuersignal CSA, der Signalgeber SGB durch das Steuersignal CSB und der Signalgeber SGC durch das Steuersignal CSC jeweils individuell und signalgeberspezifisch angesteuert.

Im vorliegenden Ausführungsbeispiel sind die Signalgeber SGA, SGB und SGC jeweils ringförmig um das Armglied L in Gelenknähe angeordnet und umfassen jeweils verschiedenfarbige Leuchtmittel wie zum Beispiel Leuchtdioden oder ein ringförmig gebogenes Display. Eine solche ringförmige Anordnung ist insofern vorteilhaft, als sie für den Operateur von allen Seiten sichtbar ist, ohne den Blick vom Gelenkarmroboter GAR abzuwenden. Die ringförmigen Signalgeber SGA, SGB und SGC geben jeweils abgestufte optische Signale ab, deren Farbe und/oder Leuchtintensität abhängig von den Steuersignalen CSA, CSB und CSC beziehungsweise abhängig von der Abweichung D graduell variierbar ist.

Insbesondere können Anzahl und Farbe der leuchtenden Signalgeber SGA, SGB und SGC abhängig von den Komponenten des gemessenen Statusparameters SP variiert werden. Hierbei kann zum Beispiel die Anzahl der leuchtenden Ringe SGA, SGB und SGC einen Abstand des aktuellen Drehwinkels des Gelenks G zum Grenzwinkel des Referenzparameters RP codieren und eine Farbe der leuchtenden Ringe SGA, SGB und SGC einen Abstand des aktuellen Drehmoments zum Grenz-Drehmoments des Referenzparameters RP angeben. Zum Beispiel gemäß folgender Zuordnung:
Nur der Signalgeber SGA leuchtet: Der Drehwinkel des Gelenks G befindet sich in unbedenklichem Abstand vom Grenzwinkel des Referenzparameters RP.

Nur SGA und SGB leuchten: Der Drehwinkel des Gelenks G befindet sich in der Nähe des Grenzwinkels.

SGA, SGB und SGC leuchten: Der Grenzwinkel ist erreicht.

Grünes Leuchten: Das aktuelle Drehmoment des Gelenks G befindet sich in unbedenklichem Abstand vom Grenz-Drehmoment des Referenzparameters RP.

Gelbes Leuchten: Das aktuelle Drehmoment des Gelenks G befindet in der Nähe des Grenz-Drehmoments.

Rotes Leuchten: Das Grenz-Drehmoment ist erreicht oder überschritten.

Auf die vorstehend beschriebene Weise können gleichzeitig ein kinematischer Zustand sowie ein dynamischer Zustand des Gelenks G oder des Armglieds L gelenkspezifisch am Roboterarm RA visualisiert werden. Die Visualisierung ist interaktiv und unmittelbar wahrnehmbar, ohne den Blick vom gerade geführten oder sich bewegenden Roboterarm RA abzuwenden. Dies erlaubt eine genauere, schnellere, sicherere und damit effizientere Interaktion zwischen dem Gelenkarmroboter GAR und dem Operateur.

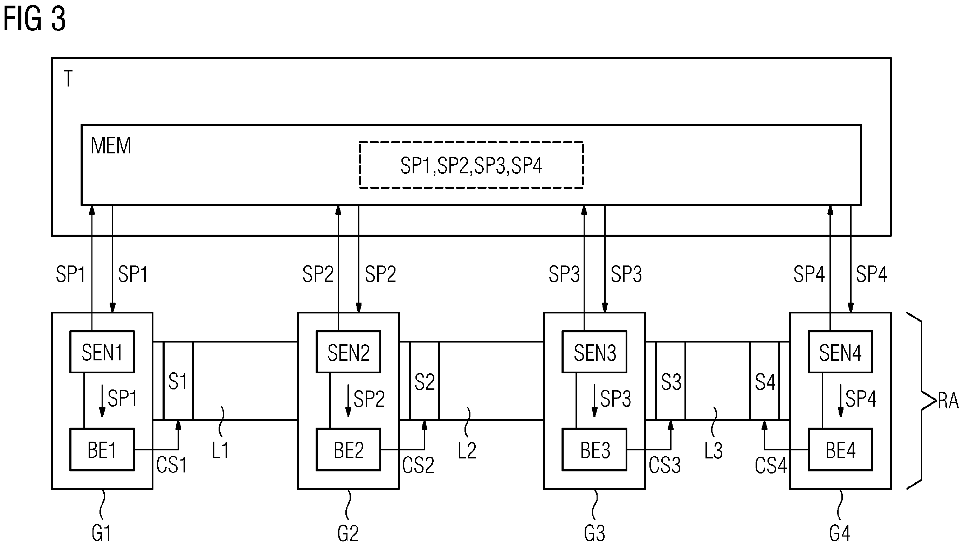

Figur 3 zeigt ein funktionales Diagramm zur Veranschaulichung des Einlernens eines Bewegungsablaufs des Gelenkarmroboters GAR. Insofern in Figur 3 die gleichen Bezugszeichen wie in den vorangegangenen Figuren verwendet werden, bezeichnen diese Bezugszeichen die gleichen Entitäten, die wie oben beschrieben implementiert oder realisiert sein können. In Figur 3 ist insbesondere ein Teil des in Figur 1 dargestellten Roboterarms RA mit den Gelenken G1,...,G4 und den Armgliedern L1,...,L3 schematisch dargestellt.

Die Gelenke G1,...,G4 umfassen jeweils gelenkspezifische Sensoren SEN1,... bzw. SEN4, durch die, wie oben beschrieben, jeweils ein mehrkomponentiger, gelenkspezifischer Statusparameter SP1,... bzw. SP4 des jeweiligen Gelenks G1,... bzw. G4 fortlaufend gemessen wird.

Zum Einlernen eines Bewegungsablaufs des Roboterarms RA führt - wie oben bereits erwähnt - ein Operateur den Roboterarm RA manuell entlang einer gewünschten Bewegungstrajektorie, während die hierbei fortlaufend gemessenen und zur Teaching-Einrichtung T übermittelten Statusparameter SP1,...,SP4 in einem Speicher MEN der Teaching-Einrichtung T gespeichert werden. Anhand der auf diese Weise gespeicherten Statusparameter SP1,...,SP4 kann der Gelenkarmroboter GAR jeden eingelernten Bewegungsablauf beliebig wiederholen. Hierzu werden die gespeicherten Statusparameter SP1,...,SP4, insbesondere die kinematischen Bewegungsparameter, von der Teaching-Einrichtung T in einer dem Einlernvorgang entsprechenden zeitlichen Reihenfolge zum jeweiligen Gelenk G1,... bzw. G4 übermittelt. Anhand der übermittelten Statusparameter SP1,...,SP4 werden Servomotoren (nicht dargestellt) eines jeweiligen Gelenks derart angesteuert, dass der gespeicherte Bewegungsablauf reproduziert wird.

Während des Einlernens werden die gemessenen Statusparameter SP1,...,SP4 von den jeweiligen Sensoren SEN1,... bzw. SEN4 zusätzlich zu einer jeweiligen Bewertungseinrichtung BE1,... bzw. BE4 des betreffenden Gelenks G1,... bzw. G4 übermittelt. Die jeweilige Bewertungseinrichtung BE1,... bzw. BE4 ist dazu eingerichtet, eine dem jeweiligen Gelenk G1,... bzw. G4 zugeordnete optische Signalisierungseinrichtung S1,... bzw. S4 während des Einlernens anhand des jeweils gemessenen Statusparameters SP1,... bzw. SP4 anzusteuern.

Die Signalisierungseinrichtungen S1,...,S4 können jeweils wie im Zusammenhang mit Figur 2 beschrieben implementiert sein. In Figur 3 werden aus Übersichtlichkeitsgründen einzelne Signalgeber der Signalisierungseinrichtungen S1,...,S4 nicht unterschieden.

Zum Ansteuern einer jeweiligen Signalisierungseinrichtung S1,... bzw. S4 bildet eine jeweilige Bewertungseinrichtung BE1,... bzw. BE4 ein gelenkspezifisches Steuersignal CS1,... bzw. CS4 und übermittelt dieses zur betreffenden Signalisierungseinrichtung S1,... bzw. S4. Durch die Steuersignale CS1,...,CS4 werden die Signalisierungseinrichtungen S1,...,S4 wie im Zusammenhang mit Figur 2 beschrieben während des Einlernvorgangs angesteuert.

Auf diese Weise können aktuelle kinematische und dynamische Zustände der Gelenke G1,...,G4 fortlaufend und in Echtzeit während des Einlernvorgangs optisch visualisiert werden. Insbesondere können so Nebenbedingungen oder Grenzwerte, die vom Operateur nicht direkt zu beobachten sind, dem Operateur unmittelbar angezeigt werden. Auf diese Weise können ungünstige Posen, Überlastsituationen oder Beschädigungen häufig schon während des Ausführens einer Bewegung vermieden werden. Damit kann der Einlernvorgang oder eine andere Interaktion des Operateurs mit dem Gelenkarmroboter GAR insgesamt effizienter gestaltet werden.

Zur weiteren Optimierung des Einlernvorgangs oder einer anderen Interaktion des Operateurs mit dem Gelenkarmroboter GAR kann eine jeweilige Signalisierungseinrichtung S1,... bzw. S4 eine Richtungsanzeige (nicht dargestellt) umfassen. Durch die Richtungsanzeige kann abhängig von einem jeweiligen Statusparameter SP1,... bzw. SP4 eine vorteilhafte Bewegungsrichtung und/oder eine Richtung einer wirkenden Kraft angezeigt werden. Insbesondere kann dem einlernenden Operateur eine Vorzugsrichtung für eine Bewegung angezeigt werden, die zu einem geringeren Kraftaufwand oder zu einer geringeren Belastung des Roboterarms RA führt. Eine solche Vorzugsrichtung kann zum Beispiel durch Simulation von möglichen Bewegungen und bewegungsbedingten Kräfteverhältnissen des Roboterarms RA sowie durch Anwendung von bekannten Optimierungsverfahren ermittelt werden.

## Patentansprüche

1. Gelenkarmroboter (GAR) mit
a) einem Roboterarm (RA) mit einem über ein Gelenk (G1,...,G4) beweglichen Armglied (L1,L2,L3),
b) einem Sensor (SEN1,...,SEN4) zum fortlaufenden Messen eines Statusparameters (SP1,...,SP4) des Gelenks (G1,...,G4),
c) einer am Roboterarm (RA) in räumlicher Zuordnung zum Gelenk angeordneten, optischen Signalisierungseinrichtung (S1,...,S4), und
d) einer Bewertungseinrichtung (BE1,...,BE4) zum fortlaufenden, gelenkspezifischen Bewerten des gemessenen Statusparameters (SP1,...,SP4) und zum Ansteuern der Signalisierungseinrichtung (S1,...,S4) abhängig von einem Ergebnis (D) der Bewertung.

2. Gelenkarmroboter nach Anspruch 1, **dadurch gekennzeichnet, dass** der Statusparameter (SP1,...,SP4)
eine Auslenkung, einen Drehwinkel oder einen anderen kinematischen Bewegungsparameter des Gelenks (G1,...,G4),
eine Kraft, eine Belastung, ein Drehmoment oder einen anderen dynamischen Kraftparameter des Gelenks (G1,...,G4) und/oder eine Temperatur, einen Öldruck, eine Ölmenge oder einen anderen Betriebsparameter des Gelenks (G1,...,G4) betrifft.

3. Gelenkarmroboter nach einem der vorhergehenden Ansprüche, **dadurch gekennzeichnet,**
**dass** die Bewertungseinrichtung (BE1,...,BE4) dazu eingerichtet ist, eine Abweichung (D) zwischen dem gemessenen Statusparameter (SP1,...,SP4) und einem Referenzparameter (RP) zu quantifizieren, und
**dass** die Signalisierungseinrichtung (S1,...,S4) dazu eingerichtet ist, abhängig von der quantifizierten Abweichung (D) graduell abgestufte optische Signale abzugeben.

4. Gelenkarmroboter nach einem der vorhergehenden Ansprüche, **gekennzeichnet durch**
eine Teaching-Einrichtung (T) zum Einlernen eines Bewegungsablaufs des Roboterarms (RA) **durch** manuelles Führen des Roboterarms (RA) und Auswerten des gemessenen Statusparameters (SP1,...,SP4), wobei
die Bewertungseinrichtung (BE1,...,BE4) dazu eingerichtet ist, die Signalisierungseinrichtung (S1,...,S4) während des Einlernens anhand des gemessenen Statusparameters (SP1,...,SP4) anzusteuern.

5. Gelenkarmroboter nach einem der vorhergehenden Ansprüche, **dadurch gekennzeichnet,**
**dass** die Signalisierungseinrichtung (S1,...,S4) am Armglied (L1,L2,L3) in einem Abstand zum Gelenk (G1,...,G4) angebracht ist, der geringer ist, als ein Abstand zu anderen Gelenken des Roboterarms (RA).

6. Gelenkarmroboter nach einem der vorhergehenden Ansprüche, **dadurch gekennzeichnet, dass**
die Signalisierungseinrichtung (S1,...,S4) eine oder mehrere Leuchtdioden und/oder ein oder mehrere Displays umfasst.

7. Gelenkarmroboter nach einem der vorhergehenden Ansprüche, **dadurch gekennzeichnet, dass**
die Signalisierungseinrichtung (S1,...,S4) ein oder mehrere berührungsempfindliche Displays umfasst.

8. Gelenkarmroboter nach einem der vorhergehenden Ansprüche, **dadurch gekennzeichnet, dass**
die Signalisierungseinrichtung (S1,...,S4) Leuchtmittel umfasst, die ringförmig oder teilringförmig um das Armglied (L1,L2,L3) und/oder das Gelenk (G1,...,G4) angebracht sind.

9. Gelenkarmroboter nach einem der vorhergehenden Ansprüche, **dadurch gekennzeichnet, dass**
die Signalisierungseinrichtung (S1,...,S4) dazu eingerichtet ist, abhängig vom Ergebnis (D) der Bewertung eine Signalintensität und/oder Signalfarbe zu variieren.

10. Gelenkarmroboter nach einem der vorhergehenden Ansprüche, **dadurch gekennzeichnet, dass**
die Signalisierungseinrichtung (S1,...,S4) mehrere optische Signalgeber (SGA,SGB,SGC) umfasst, die jeweils individuell und abhängig vom Ergebnis (D) der Bewertung aktivierbar sind.

11. Gelenkarmroboter nach einem der vorhergehenden Ansprüche, **dadurch gekennzeichnet,**
**dass** die Signalisierungseinrichtung (S1,...,S4) eine Richtungsanzeige umfasst, und
**dass** die Bewertungseinrichtung (BE1,...,BE4) dazu eingerichtet ist, anhand des gemessenen Statusparameters (SP1,...,SP4) eine bewegungsoptimierende und/oder kraftoptimierende Vorzugsrichtung für eine Bewegung des Gelenks (G1,...,G4) zu ermitteln und die Richtungsanzeige abhängig von der ermittelten Vorzugsrichtung anzusteuern.
